# FASCICULE DE BREVET EUROPEEN

(11) **EP 3 386 744 B1**
(45) Date de publication et mention de la délivrance du brevet: **08.04.2020**
(21) Numéro de dépôt: 16825806.9
(22) Date de dépôt: 06.12.2016
(51) Int. Cl.: B32B 7/10, B32B 7/12, B32B 27/08, B32B 27/30, B32B 27/32, B32B 1/08, F16L 11/04

(54) **STRUCTURE MULTICOUCHE COMPRENANT UNE COUCHE CONTENANT UN POLYMÈRE FLUORE ET COPOLYMÈRE ACRYLIQUE - PROCÉDÉ DE FABRICATION ET TUBE ASSOCIÉS**
MEHRSCHICHTIGE STRUKTUR MIT EINER SCHICHT MIT EINEM FLUORPOLYMER UND ACRYLCOPOLYMER - ZUGEHÖRIGES HERSTELLUNGSVERFAHREN UND ROHR
MULTILAYER STRUCTURE COMPRISING A LAYER CONTAINING A FLUOROPOLYMER AND ACRYLIC COPOLYMER - ASSOCIATED PRODUCTION METHOD AND TUBE

(30) Priorité: 08.12.2015 FR 1561980
(43) Date de publication de la demande: 17.10.2018
(73) Titulaire: Arkema France, 92700 Colombes (FR)
(72) Inventeur: ABGRALL, Florent, 27300 Bernay (FR); DEVISME, Samuel, 76000 Rouen (FR); LABOUR, Thomas, 27930 Aviron (FR); RONDIN, Jérôme, 27300 Courbepine (FR)
(74) Mandataire: Albani, Dalila
(86) Numéro de dépôt international: PCT/FR2016/053232
(87) Numéro de publication internationale: WO 2017/098139

(56) Documents cités:
- EP-A1- 0 450 994
- WO-A2-02/062567
- WO-A2-2008/017790
- FR-A1- 2 886 707
- FR-A1- 2 892 171

## Description

### DOMAINE DE L'INVENTION

La présente invention concerne une structure multicouche apte à être utilisée notamment dans le transport de l'eau.

### ARRIERE-PLAN TECHNIQUE

Les polymères fluorés, en particulier les polymères obtenus à partir de fluorure de vinylidène, possèdent une grande inertie chimique, ce qui les rend notamment adaptés au transport de nombreux produits chimiques. Leur résistance aux agents chlorés (dioxyde de chlore, chloramines, hypochlorite de sodium...) en fait des candidats de choix pour les applications de transport d'eau, en particulier d'eau chaude, notamment en milieu hospitalier et sanitaire, où des traitements agressifs à base d'agents chlorés sont couramment utilisés.

Les conduites ou canalisations d'eau potable doivent répondre à des critères très stricts. La canalisation ne doit pas perdre ses propriétés mécaniques du fait de l'eau traitée qu'elle contient ; elle doit notamment être résistante au vieillissement, ne pas se percer ou casser et être souple pour faciliter son installation. Elle doit de plus préserver la qualité de l'eau transportée : la structure de la canalisation ne doit rejeter dans l'eau transportée qu'une faible quantité de composés chimiques donnés et/ou éviter l'accumulation d'un biofilm sur la surface interne de la canalisation. La canalisation doit également être facile à fabriquer, par exemple par coextrusion.

Les polyoléfines et notamment les polyéthylènes présentent des propriétés mécaniques qui les rendent adaptées pour être utilisées sous la forme de tube pour canalisation. Néanmoins, la résistance chimique limitée de ces polymères les rend sensibles aux agents chlorés utilisés pour le traitement de l'eau, plus particulièrement dans des conditions de température élevée (supérieure à 70°C). Une couche interne de polymère fluoré associée à une couche de polyoléfine peut ainsi protéger cette dernière de l'action de ces agents chimiques agressifs contenus dans l'eau. Cependant, de par leur nature chimique différente, ces polymères sont incompatibles, il est donc difficile de faire adhérer les polymères fluorés sur les polyoléfines.

Le document DE 202011103017 U1 décrit des canalisations pour eau potable qui comportent un tube en PVDF (poly fluorure de vinylidène). Ce tube est recouvert d'une feuille d'aluminium et solidarisé à cette dernière au moyen d'un liant ; la feuille d'aluminium est elle-même recouverte d'une couche de polyéthylène. La feuille d'aluminium confère à la canalisation une faible perméation aux gaz et limite la migration des constituants chimiques du polyéthylène vers l'eau. La présence de la feuille d'aluminium rend la canalisation coûteuse et difficile à fabriquer.

Le document FR 2 892 171 décrit un tube pouvant être utilisé comme canalisation pour le transport d'eau. Ce tube comprend une structure multicouche qui comprend une couche C2 contenant un polymère fluoré fonctionnalisé liée à une couche C3 ou C4 contenant une polyoléfine. Il s'avère que ce type de structure multicouche résiste mal au vieillissement lorsqu'elle est en contact avec de l'eau chaude.

Le document WO 02/062567 A2 décrit des structures multicouches ayant une couche en polymère fluoré utiles pour faire des dispositifs de transfert ou de stockage de fluides et plus particulièrement de tuyaux.

Il existe toujours un besoin de formuler de nouveaux liants qui permettent de solidariser un polymère fluoré à un autre polymère qui lui est incompatible. Il existe tout particulièrement un besoin de mettre au point de nouveaux liants, permettant de fabriquer des structures multicouches adaptées notamment pour le transport d'eau potable, en particulier de l'eau potable chaude.

Un problème qu'entend résoudre l'invention est de proposer une structure multicouche qui présente une bonne adhésion entre une couche comprenant un polymère fluoré et une couche de polymère incompatible avec ledit polymère fluoré.

Un autre but de la présente invention est de proposer une structure multicouche présentant un niveau d'adhésion satisfaisant, par exemple, sensiblement supérieur ou égal à 30N/cm entre la couche comprenant un polymère fluoré et la couche de polymère incompatible, cette adhésion étant mesurée par pelage longitudinal, c'est-à-dire découpe longitudinale d'un tube et mesure de l'adhésion par la méthode dite de « pelage à 90° imposé » à une température de 23°C et une vitesse de tirage de 50mm/min, le bras de levier composé de la ou des couche(s) contenant du polymère fluoré ayant une épaisseur totale comprise entre 200 et 400µm.

Un autre but de la présente invention est de proposer une structure multicouche qui puisse résister au vieillissement (durant notamment au moins 2 000 heures) dans une eau à une température égale ou supérieure à 80°C, en particulier égale à 95°C, cette eau pouvant contenir des agents chlorés utilisés pour le traitement de l'eau.

### RESUME DE L'INVENTION

Pour atteindre l'un des buts précités, la présente invention concerne une structure multicouche comprenant dans l'ordre :
- éventuellement une couche A comprenant au moins un polymère fluoré,
- une couche B comprenant au moins un polymère fluoré et un copolymère acrylique comportant des monomères ayant une pluralité de groupements fonctionnels X,
- une couche C comprenant, et de préférence consistant en au moins un premier polymère oléfinique comportant des monomères ayant une pluralité de groupements fonctionnels Y aptes à interagir avec les groupements fonctionnels X,
- éventuellement, une couche intermédiaire D comprenant au moins un deuxième polymère oléfinique comportant des monomères ayant une pluralité de groupements fonctionnels Z aptes à interagir avec lesdits groupements fonctionnels Y, ledit deuxième polymère oléfinique étant différent de celui/ceux compris dans ladite couche C,
- une couche E comprenant au moins un polymère, et notamment un polymère oléfinique incompatible avec ledit polymère fluoré de ladite couche A et/ou de ladite couche B.

La Demanderesse a en effet mis en évidence qu'il était possible d'obtenir une meilleure adhésion entre un polymère fluoré et un polymère incompatible audit polymère fluoré, ces polymères se trouvant incorporés dans deux couches différentes non-adjacentes, au moyen d'un ensemble formé d'une couche comprenant un mélange d'un polymère fluoré avec un copolymère acrylique comportant des groupement fonctionnels tels que précités, ladite couche étant solidaire d'au moins une couche intermédiaire contenant au moins un polymère oléfinique fonctionnalisé. On obtient ainsi une structure multicouche simple à fabriquer et peu couteuse.

Les différentes couches composant la structure peuvent également comporter des additifs, notamment rhéologiques, des modifiants chocs, des pigments, ainsi que tout autre additif connu de l'homme du métier.

Dans le cas d'une utilisation d'une structure multicouche de l'invention en contact avec l'eau potable, la structure multicouche selon l'invention comprend, de préférence, une couche A en contact direct avec l'eau potable. La présence de cette couche A assure une meilleure résistance chimique aux agents de traitement de l'eau et une meilleure résistance à la formation de biofilm à la surface du matériau en contact direct avec l'eau potable.

La présente invention concerne également un tube pour le transport de fluides, notamment de liquides tels que l'eau ou les liquides à usage alimentaire, ledit tube étant apte plus particulièrement au transport de l'eau potable, notamment de l'eau potable chaude.

### DESCRIPTION DE MODES DE REALISATION DE L'INVENTION

L'invention est maintenant décrite plus en détail et de façon non limitative dans la description qui suit.

La présente invention concerne une structure multicouche comprenant dans l'ordre :
- éventuellement une couche A comprenant au moins un polymère fluoré,
- une couche B comprenant au moins un polymère fluoré et un copolymère acrylique comportant des monomères ayant une pluralité de groupements fonctionnels X,
- une couche C consistant en un premier polymère oléfinique comportant des monomères ayant une pluralité de groupements fonctionnels Y aptes à interagir avec les groupements fonctionnels X,
- éventuellement, une couche intermédiaire D comprenant au moins un deuxième polymère oléfinique comportant des monomères ayant une pluralité de groupements fonctionnels Z aptes à interagir avec lesdits groupements fonctionnels Y, ledit deuxième polymère oléfinique étant différent de celui/ceux compris dans ladite couche C,
- une couche E comprenant au moins un polymère, et notamment un polymère oléfinique incompatible avec ledit polymère fluoré de ladite couche A et/ou de ladite couche B.

De manière caractéristique, les monomères portant des groupements fonctionnels Y sont des époxydes insaturés ou des esters vinyliques d'acides carboxyliques saturés.

Ces couches sont décrites en détail ci-après.

### Couche B

La couche B comprend au moins un polymère fluoré et un copolymère acrylique comportant des monomères ayant une pluralité de groupements fonctionnels X.

Selon un mode de réalisation, les groupements fonctionnels X sont des groupements carboxyle.

Selon un mode de réalisation, les groupements fonctionnels X sont des groupements anhydride d'acide carboxylique.

Selon un mode de réalisation, les groupements fonctionnels X sont des mélanges de groupements carboxyle et anhydride d'acide carboxylique.

Selon un mode de réalisation, le copolymère acrylique est un copolymère de méthacrylate de méthyle et d'anhydride glutarique ou un copolymère de méthacrylate de méthyle et d'acide méthacrylique ou un mélange de ces deux copolymères.

Avantageusement, le copolymère acrylique de ladite couche B comprend, en poids, de 1% à 50%, préférentiellement entre 1% et 25%, bornes incluses, de monomères portant une fonction X décrite ci-dessus.

De préférence, ladite couche B est exempte de polymère alpha oléfinique comprenant au moins un groupement fonctionnel choisi parmi les groupements carboxyle, anhydride d'acide, hydroxyle et époxy.

Le polymère fluoré de la couche A et celui de la couche B ne sont pas limitatifs selon l'invention. Ils peuvent être identiques dans les deux couches ou non. Les couches peuvent également comprendre un mélange d'au moins deux polymères fluorés, ce mélange étant identique ou non dans les couches A et B.

Ainsi, le(s) polymère(s) fluoré(s) des couches A et B est/sont choisi(s) parmi les homopolymères de fluorure de vinylidène (PVDF) et les copolymères de fluorure de vinylidène et d'au moins un autre comonomère. Selon un mode de réalisation le comonomère du VDF est choisi parmi le fluorure de vinyle, le trifluoroéthylène (VF3), le chlorotrifluoroéthylène (CTFE), le 1,2-difluoroéthylène, tétrafluoroéthylène (TFE), l'hexafluoropropylène (HFP), les perfluoro(alky vinyl) éthers tels que le perfluoro(méthylvinyl)éther (PMVE), le perfluoro(éthylvinyl)éther (PEVE), le perfluoro(propylvinyl)éther (PPVE), le perfluoro(1,3-dioxozole); le perfluoro(2,2diméthyl-1,3dioxole) (PDD), le produit de formule CF₂=CFOCF₂CF(CF₃)OCF₂CF₂X dans laquelle X est SO₂F, CO₂H, CH₂OH; CH₂OCN ou CH₂OPO₃H, le produit de formule CF₂=CFOCF₂CF₂SO₂F; le produit de formule F(CF₂)nCH₂OCF=CF₂ dans laquelle n est 1,2,3,4 ou 5, le produit de formule R₁CH₂OCF=CF₂ dans laquelle R₁ est l'hydrogène ou F(CF₂)_{z} et z vaut 1, 2, 3, ou 4; le produit de formule R₃OCF=CH₂ dans laquelle R₃ est F(CF₂)_{z} et z vaut 1, 2, 3, ou 4 ou encore le perfluorobutyléthylène (PFBE), le fluoroéthylènepropylène (FEP), le 3,3,3-trifluoropropène, le 2 trifluoromethyl-3,3,3-trifluoro-1-propène, le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropene ou HFO-1234yc, le1,2,3,3-tetrafluoropropène ou HFO-1234ye, le 1,1,3,3-tetrafluoropropène ou HFO-1234zc, le chlorotetrafluoropropène ou HCFO-1224, les chlorotrifluoropropènes (notamment le 2-chloro-3,3,3-trifluoropropène), le 1-chloro-2-fluoroéthylène, les trifluoropropènes (notamment le 3,3,3-trifluoropropène), les pentafluoropropènes (notamment le 1,1,3,3,3-pentafluoropropène ou le 1,2,3,3,3-pentafluoropropène), le 1-chloro-2,2-difluoroethylène, le 1-bromo-2,2-difluoroethylène, et le bromotrifluoroéthylène. Le copolymère peut aussi comprendre des monomères non fluorés tels que l'éthylène.

Selon un mode de réalisation d'un copolymère de VDF (fluorure de vinylidène) utilisable pour la couche A et pour la couche B, le comonomère est l'hexafluoropropylène (HFP).

Selon un mode de réalisation qui peut être combiné avec l'un quelconque des modes de réalisation précités, le polymère fluoré de la couche A est un homopolymère de fluorure de vinylidène, le polymère fluoré de la couche B est aussi un homopolymère de fluorure de vinylidène mais différent de celui de la couche A.

### Couche C

La couche C consiste en un premier polymère oléfinique comportant des monomères ayant des groupements fonctionnels Y aptes à interagir avec les groupements fonctionnels X.

Les monomères portant des groupements fonctionnels Y sont choisis parmi :
- les époxydes insaturés, notamment les esters et éthers de glycidyle aliphatique tels que l'allylglycidyléther, le vinylglycidyléther, le maléate et l'itaconate de glicydyle, l'acrylate et le méthacrylate de glycidyle, ainsi que les esters et éthers de glycidyle alicycliques ; et
- les esters vinyliques d'acides carboxyliques saturés, notamment l'acétate de vinyle ou le propionate de vinyle.

Selon un mode de réalisation particulier de la couche C qui peut être combiné avec l'un quelconque des modes de réalisation des autres couches, le premier polymère oléfinique est un copolymère d'éthylène et d'au moins un monomère polaire insaturé portant des fonctions Y de la liste précédente, qui contient en poids au moins 50%, avantageusement plus de 60% et de préférence au moins 65% d'éthylène.

Selon un mode de réalisation particulier de la couche C qui peut être combiné avec l'un quelconque des modes de réalisation des autres couches, le premier polymère oléfinique est un terpolymère d'éthylène, d'au moins un monomère polaire insaturé portant des fonctions Y de la liste précédente et de (méth)acrylates d'alkyle en C₁-C₈, notamment le (méth)acrylate de méthyle, de propyle, de butyle, de 2-ethylhexyle, d'isobutyle, de cyclohexyle. Ce terpolymère contient en poids au moins 50%, avantageusement plus de 60% et de préférence au moins 65% d'éthylène.

Ce premier polymère oléfinique peut comprendre en poids de 50 à 99,9% d'éthylène, de préférence de 60 à 99,9%, encore plus préférentiellement de 65 à 99,9% et de 0,1 à 50%, de préférence de 0,1 à 40%, encore plus préférentiellement de 0,1 à 35% d'au moins un monomère polaire insaturé portant des fonctions Y de la liste précédente. Les bornes des intervalles précitées correspondent à des valeurs massiques que le polymère oléfinique de l'invention peut contenir.

### Couche D

Selon un mode de réalisation qui peut être combiné avec les autres modes de réalisation précités en référence aux couches A, B, C et E, la structure selon l'invention comprend une couche intermédiaire D.

La couche intermédiaire D comprend au moins un deuxième polymère oléfinique comportant des monomères ayant des groupements fonctionnels Z aptes à interagir avec lesdits groupements fonctionnels Y, ledit deuxième polymère oléfinique étant différent de celui/ceux compris dans ladite couche C.

Les groupements fonctionnels Z sont choisis parmi les acides carboxyliques insaturés, les acides di-carboxyliques insaturés ayant 4 à 10 atomes de carbone et leurs dérivés anhydride.

Ledit deuxième polymère oléfinique est choisi parmi les polymères obtenus par greffage d'au moins un monomère polaire insaturé ayant un groupement fonctionnel Z, sur au moins un homopolymère de propylène ou un copolymère de propylène et d'un monomère polaire insaturé choisi parmi les esters alkyliques en C₁-C₈ ou les esters glycidyliques des acides carboxyliques insaturés, ou les sels d'acides carboxyliques insaturés ou leur mélange.

Avantageusement, le polymère comprend en masse une quantité dudit monomère de greffage égale ou inférieure à 5%.

Le deuxième polymère oléfinique est de préférence, indépendamment des autres constituants des autres couches, un polypropylène greffé d'anhydride maléique.

### Couche E

Selon un mode de réalisation particulier, qui peut être combiné avec l'un quelconque des modes de réalisation précités, ladite structure multicouche comporte éventuellement la couche A, les couches B et C et une couche E. La couche E comprend au moins un polymère, et notamment un troisième polymère oléfinique incompatible avec ledit polymère fluoré de ladite couche A et/ou de ladite couche B.

Lorsque ladite structure multicouche comporte la couche A et les couches B, C et E, ledit polymère incompatible de la couche E est choisi parmi les homopolymères d'éthylène, les copolymères d'éthylène et d'au moins un autre monomère choisi parmi les alpha-oléfines, les acrylates d'alkyle, les acétates de vinyle et les mélanges de ces polymères.

Le polymère incompatible contenu dans la couche E désigne un polymère comprenant majoritairement des monomères éthylène et/ou propylène. Il peut s'agir d'un polyéthylène, homo- ou copolymère, le comonomère étant choisi parmi les alpha-oléfines (notamment le propylène, le butène, l'héxène, l'octène), les acrylates d'alkyle et les acétates de vinyle. Il peut s'agir aussi d'un propylène, homo- ou copolymère, le comonomère étant choisi parmi les alphaoléfines (notamment l'éthylène, le butène, l'héxène, l'octène). Le polymère incompatible peut également être un mélange de ces différents polymères.

Le polyéthylène peut être notamment le polyéthylène haute densité (HDPE), le polyéthylène basse densité (LDPE), le polyéthylène basse densité linéaire (LLDPE), le polyéthylène très basse densité (VLDPE). Le polyéthylène peut être obtenu à l'aide d'un catalyseur Ziegler-Natta, Phillips ou de type métallocène ou encore par le procédé haute pression. Il peut s'agir aussi d'un polyéthylène réticulé (PEX). Le PEX présente de meilleures propriétés mécaniques (notamment en ce qui concerne la résistance à la fissure) et une meilleure résistance chimique par rapport à un PE non réticulé. Le polyéthylène peut être réticulé à l'aide d'un amorceur radicalaire de type peroxyde (PEX-a). Le polyéthylène réticulé peut-être aussi par exemple un polyéthylène comprenant des groupements silanes hydrolysables (PEX-b) permettant la formation de liaisons Si-O-Si reliant les chaînes de polyéthylènes entre elles. Le polyéthylène peut aussi être réticulé à l'aide de radiations, par exemple de radiations gamma (PEX-c).

Lorsque la structure multicouche selon l'invention comprend une couche D, ledit polymère de ladite couche E est de préférence choisi parmi les homopolymères du propylène, les copolymères du propylène et d'une alpha-oléfine et les mélanges de ces polymères. Le polypropylène est de préférence un polypropylène iso- ou syndiotactique.

Le procédé de fabrication de la structure multicouche selon l'invention n'est pas limitatif. Il peut être obtenu, par exemple, par coextrusion.

La structure multicouche selon l'invention peut permettre de former des tubes, utilisables en tant que canalisation pour le transport de fluides, notamment de liquides, en particulier pour le transport de l'eau, avantageusement d'eau potable et d'eau chaude potable en particulier. L'épaisseur de la structure multicouche selon l'invention varie de 0,5 à 10 mm, de préférence de 0,8 à 5 mm et de manière encore plus préférée de 1 à 3 mm, bornes comprises.

Avantageusement, lorsqu'il s'agit d'un tube, ladite couche E est la couche externe dudit tube. Elle assure la résistance mécanique du tube. Avantageusement, le tube peut comporter une couche interne A qui empêche la formation de biofilm à la surface interne du tube. La combinaison des couches B et C permet d'assurer une adhésion élevée entre les différentes couches de la structure, même en cas de circulation d'eau chaude.

Le tube peut comporter les couches B, C et E ou les couches A, B, C et E ou les couches B, C, D et E ou les couches A, B, C, D et E. De préférence, il comporte les couches A, B, C et E. Lorsqu'elle est présente, la couche D est située entre la couche C et la couche E.

La présente invention concerne également l'utilisation d'un tube comprenant les couches B, C et E pour le transport de fluides, notamment de liquides, en particulier pour le transport de l'eau, par exemple de l'eau potable et sanitaire, et notamment chaude.

La présente invention concerne également l'utilisation d'un tube comportant les couches B, C, D et E précitée pour le transport d'eau potable.

La présente invention concerne également l'utilisation d'un tube comportant les couches B, C, D et E précitées pour le transport d'eau potable et notamment d'eau chaude potable.

La présente invention concerne également l'utilisation d'un tube comportant les couches A, B, C, D et E précitées pour le transport d'eau potable et notamment d'eau chaude potable.

Les couches A et B peuvent contenir un ou des polymères fluorés identiques ou des polymères fluorés différents.

### Définitions :

Le terme « interagir » en référence aux groupements fonctionnels X, Y et Z englobe tout type d'interaction susceptible d'engendrer la liaison des couches ; il peut s'agir d'une réaction chimique entre les groupements fonctionnels des couches en contact, de diffusion de chaînes à l'interface, les macromolécules d'une couche étant imbriquées dans celles de la couche adjacente, de liaisons intermoléculaires de type Van der Waals ou liaisons hydrogène, ou d'un mélange de ces interactions.

Le terme « copolymère acrylique comportant des monomères ayant une pluralité de groupements fonctionnels X », contenu dans la couche B, désigne un copolymère comprenant :
- des motifs du type : 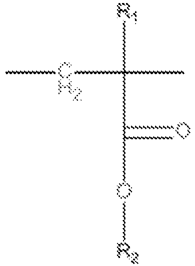 dans lequel R₁ et R₂ représentent un atome d'hydrogène ou un alkyle, linéaire ou ramifié, possédant de 1 à 20 atomes de carbone ; R1 et R2 pouvant être identique ou différents ;
- et des motifs du type : 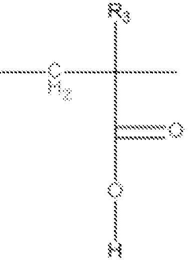 dans lequel R₃ est un atome d'hydrogène ou un alkyle, linéaire ou ramifié, contenant un à vingt atomes de carbone.

Ce dernier motif peut se présenter sous sa forme acide, mais aussi sous ses dérivés anhydrides ou un mélange de ceux-ci. Lorsqu'il se présente sous forme d'anhydride, ce motif peut être représenté par la formule : 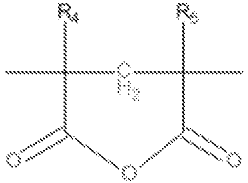 dans laquelle R₄ et R₅ représentent un atome d'hydrogène ou un alkyle, linéaire ou ramifié, possédant de 1 à 20 atomes de carbone ; R₄ et R₅ pouvant être identique ou différents.

Selon un mode de réalisation, le copolymère acrylique comprend jusqu'à 50% en poids du motif sous forme acide ou son dérivé anhydride ou un mélange des deux. Avantageusement, le copolymère acrylique comprend jusqu'à 25% en poids du motif sous forme acide ou son dérivé anhydride ou un mélange de ceux-ci.

Selon un autre mode de réalisation, R₁ et R₂ représentent le radical méthyle. Dans ce cas le liant est à base de PMMA.

Selon un autre mode de réalisation, R₃ représente le radical hydrogène ou méthyle dans le cas où le motif qui le porte se trouve sous forme acide, et R₄ et R₅ représente le radical hydrogène ou méthyle dans le cas où le motif est sous forme anhydride.

Le terme « eau potable » désigne de l'eau ayant subi un traitement de potabilisation et contenant donc des agents chimiques de traitement de l'eau tels que ceux cités en référence à l'art antérieur.

Les termes « adaptés ou transport d'eau potable » signifient que le polymère en question contient des composants qui sont tous référencés sur une liste des composants considérés comme adaptés pour le transport de l'eau potable choisie parmi les documents suivants : « WRAS certificate according to Standard BS6920 » pour le Royaume-Uni, « KTW certificate to Régulations KTW 1.3.13 » pour l'Allemagne, « KIWA certificate according to Régulations BRL 2013 » pour les Pays-Bas, le certificat ACS selon la circulaire publiée par le département français de la santé : DSG/VS4 n° 2000/232 datée du 27/04/2000 et le décret italien D.M. n° 174 (décret ministériel N° 174 daté du 06/04/2007).

### EXEMPLES

Les exemples suivants illustrent l'invention sans la limiter.

### Matériaux utilisés :

- **PVDF-1** : PVDF homopolymère d'indice de fluidité (MFI) = 20 g/10min (230°C, 3,8kg) et de température de fusion de l'ordre de 170°C
- **PVDF-2** : PVDF homopolymère d'indice de fluidité (MFI) = 2 g/10min (230°C, 5kg) et de température de fusion de l'ordre de 170°C
- **PVDF-3** : PVDF homopolymère greffé d'anhydride maléique d'indice de fluidité (MFI) = 15 g/10min (230°C, 3,8kg) et de température de fusion de l'ordre de 170°C. Utilisé en comparatif des mélanges PVDF-2 + copolymères acryliques décrits ci-dessous.
- **CA-1 :** Copolymère de méthacrylate de méthyle et de 1,3-diméthyl anhydride glutarique et d'indice de fluidité (MFI) = 3,5 g/10min (230°C, 3,8kg)
- **CA-2** : Copolymère de méthacrylate de méthyle et d'acide méthacrylique d'indice de fluidité (MFI) = 2 g/10min (230°C, 3,8kg)
- **CA-3** : Copolymère de méthacrylate de méthyle et d'acide méthacrylique d'indice de fluidité (MFI) = 3,5 g/10min (230°C, 3,8kg)
- **POF-1** : Copolymère d'éthylène et de méthacrylate de glycidyle d'indice de fluidité (MFI) = 5 g/10min (190°C, 2,16kg), de densité 0,94 g/cm³ à 23°C et de point de fusion de 105°C.
- **POF-2 :** Polypropylène greffé d'anhydride maléique d'indice de fluidité (MFI) = 7 g/10min (230°C, 2,16kg)
- **PE** : Polyéthylène d'indice de fluidité (MFI) = 0,2 g/10min (190°C, 2,16kg) et de densité 0,938 g/cm³ à 23°C
- **PP** : Polypropylène d'indice de fluidité (MFI) = 0,25 g/10min (230°C, 2,16kg) et de densité = 0,905 g/cm³ à 23°C

### Structures multicouches préparées :

### Tube multicouche S1

Le tube multicouche S1 est formé de quatre couches successives (de l'intérieur vers l'extérieur) :
Couche A : PVDF-1
Couche B : PVDF-2 + copolymère acrylique choisi parmi CA-1, CA-2, CA-3 ou PVDF-3 (exemple comparatif)
Couche C : POF-1
Couche E : PE

### Tube multicouche S2

Le tube multicouche S2 est formé de cinq couches successives (de l'intérieur vers l'extérieur) :
Couche A : PVDF-1
Couche B : PVDF-2 + copolymère acrylique choisi parmi CA-1, CA-2, CA-3 ou PVDF-3 (exemple comparatif)
Couche C : POF-1
Couche D : POF-2
Couche E : PP

### Tube multicouche S3

Le tube multicouche S3 est formé de trois couches successives (de l'intérieur vers l'extérieur) :
Couche B : PVDF-2 + copolymère acrylique choisi parmi CA-1, CA-2, CA-3 ou PVDF-3 (exemple comparatif)
Couche C : POF-1
Couche E : PE

Les mélanges de PVDF-2 et de copolymère acrylique utilisés dans la couche B de ces structures S1, S2 et S3 sont préparés au préalable en extrudeuse bi-vis corotative dans des conditions conformes aux règles de l'art, à une température de consigne de 220°C.

### Mesure de l'adhésion :

L'adhésion inter-couche est mesurée par un test de pelage selon la méthode dite de « pelage à 90° imposé » à une température de 23°C et une vitesse d'étirage de 50mm/min. Le bras de levier est composé des couches A et B et présente une épaisseur totale comprise entre 200 et 400µm. L'interface sollicitée est ainsi celle entre les couches B et C. La mesure d'adhésion est réalisée 24h après la réalisation du tube multicouches. Des mesures d'adhésion suivant le même protocole sont aussi réalisées après que le tube multicouche ait été immergé 1000 et 2000h dans l'eau à 95°C (pression = 1 bar).

### Exemple 1

Un tube multicouche de structure S1 est réalisé par coextrusion au moyen d'un dispositif fabriqué par la société McNeil Akron Repiquet. La coextrusion de ces produits est effectuée à une température de 245°C. Le tube présente un diamètre externe de 20 mm et une épaisseur totale de 2 mm. La répartition d'épaisseur au sein de la structure est la suivante :
- Couche A : 200 µm
- Couche B : 100 µm
- Couche C : 100 µm
- Couche E : 1600 µm

La nature et la concentration du copolymère acrylique au sein de la couche B est variable. En guise de comparaison, on utilise pour la couche B le polymère PVDF-3.

Le Tableau I ci-dessous présente les différents mélanges utilisés dans la couche B et les résultats des tests d'adhésion. Le nombre indiqué dans le bas de chaque case correspond à l'écart-type de la valeur d'adhésion indiquée au-dessus.

**Tableau I**

| couche B | Fraction massique de copolymère acrylique dans la couche B (%) | Adhésion à t0+ 24h (N/cm) | Adhésion à t0 + 1000h eau chaude (N/cm) | Adhésion à t0 + 2000h eau chaude (N/cm) |
|---|---|---|---|---|
| PVDF-3 (témoin) | - | 34,0 | 3,9 | 3,4 |
| | | *1,8* | *1,3* | *0,6* |
| PVDF-2 + CA-1 | 10 | 52,9 | 44,5 | 47,2 |
| | | *3,8* | *3,8* | *2,7* |
| PVDF-2 + CA-2 | 6 | N.P. | 49,8 | 49,5 |
| | | - | *3,1* | *3* |
| PVDF-2+ CA-3 | 3 | N.P. | 40,3 | 40,2 |
| | | - | *2,2* | *5,2* |

Les lettres N.P. indiquées dans le Tableau II indiquent que l'amorce n'est pas propageable ce qui signifie que l'adhésion entre les couches B et C est si élevée qu'en exerçant une force sur le bras de levier, on dépasse sa contrainte à la rupture et l'échantillon se casse sans pouvoir séparer les deux couches précitées.

On constate que des adhésions supérieures à 40N/cm sont atteintes avec chacun des 3 copolymères acryliques testés et conservées après vieillissement. L'utilisation d'un liant selon l'invention comprenant un copolymère acrylique portant un groupement fonctionnel X permet donc d'obtenir une adhésion améliorée par rapport au PVDF fonctionnalisé PVDF-3. L'utilisation de ce dernier induit clairement une perte progressive d'adhésion à l'interface entre les couches B et C lors d'une exposition à l'eau à 95°C, suivie d'une décohésion à l'interface entre les couches. Le tube multicouche selon l'invention présente ainsi une meilleure résistance au vieillissement, notamment en eau chaude. L'adhésion en eau chaude au bout de 1000h est sensiblement la même que celle obtenue au bout de 2000h et reste supérieure au seuil de 30N/cm.

### Exemple 2

Un tube multicouche de structure S1 est réalisé par coextrusion au moyen d'un dispositif fabriqué par la société McNeil Akron Repiquet. La coextrusion de ces produits est effectuée à une température de 245°C. Le tube présente un diamètre externe de 20 mm et une épaisseur totale de 2 mm. L'épaisseur de la couche B est variable au sein de la structure ce qui conduit à la répartition d'épaisseur suivante :
- Couche A : x µm
- Couche B : 100 µm
- Couche C : 100 µm
- Couche E : 1800 - x µm

La nature et la concentration du copolymère acrylique au sein de la couche B est variable. En guise de comparaison, on utilise le polymère PVDF-3 dans la couche B. Les mesures d'adhésion à l'interface entre les couches B et C sont présentées dans le Tableau II.

**Tableau II**

| couche B | Fraction massique de copolymère acrylique dans la couche B | Epaisseur de la couche A (x) (µm) | Adhésion à t0+ 24h (N/cm) | Adhésion à t0 + 1000h eau chaude (N/cm) | Adhésion à t0 + 2000h eau chaude (N/cm) |
|---|---|---|---|---|---|
| PVDF-3 (témoin) | - | 200 | 34,0 | 3,9 | 3,4 |
| | | | *1,8* | *1,3* | *0,6* |
| PVDF-2 + CA-1 | 10 | 100 | 41,5 | 37,7 | 38 |
| | | | *3,3* | *2,3* | *7,2* |
| | | 200 | 52,9 | 44,5 | 47,2 |
| | | | *3,8* | *3,8* | *2,7* |
| | | 300 | 43,6 | 56,4 | 56,9 |
| | | | *1,7* | *6,2* | *2,9* |
| PVDF-2 + CA-2 | 6 | 100 | N.P. | 30,6 | 23,6 |
| | | | - | *1,1* | *4,8* |
| | | 200 | N.P. | 49,8 | 49,5 |
| | | | - | *3,1* | *3* |
| | | 300 | N.P. | 49,1 | 52,3 |
| | | | - | *1,9* | *1* |

On constate qu'une augmentation de l'épaisseur de la couche A donc de l'épaisseur du bras de levier interne provoque une hausse du résultat mesuré lors du test d'adhésion. Cela illustre la contribution mécanique dans la déformation du bras de levier dans cette mesure. Une comparaison du niveau d'adhésion obtenu dans 2 structures différentes ne peut donc se faire qu'à épaisseur de bras de levier constante, composition de ce bras de levier aussi proche que possible et température identique.

De plus, cet exemple montre également que, dans le cas d'une couche interne de PVDF-1 = 100µm, on observe une baisse d'adhésion progressive avec le liant « PVDF-2 + CA-2 » alors que le niveau d'adhésion mesuré dans les mêmes conditions pour le liant « PVDF-2 + CA-1 » reste stable. La présence de groupements anhydride permet donc un meilleur maintien de l'adhésion dans cette structure.

### Exemple 3

Un tube multicouche de structure S2 est réalisé par coextrusion au moyen d'un dispositif fabriqué par la société McNeil Akron Repiquet. La coextrusion de ces produits est effectuée à une température de 245°C. Le tube présente un diamètre externe de 32 mm et une épaisseur totale de 3 mm. La répartition d'épaisseur au sein de la structure est la suivante :
- Couche A : 300 µm
- Couche B : 100 µm
- Couche C : 500 µm
- Couche D : 500 µm
- Couche E : 1600 µm

La nature et la concentration du copolymère acrylique au sein de la couche B est variable. En guise de comparaison, on utilise le polymère PVDF-3 dans la couche B.

Le Tableau III ci-dessous présente les différents mélanges utilisés dans la couche B et les adhésions générées à l'interface entre les couches B et C. Des adhésions supérieures à 40N/cm sont atteintes avec chacun des 3 copolymères acryliques testés et conservées après vieillissement. Ceci n'est pas le cas lorsqu'un PVDF fonctionnalisé PVDF-3 est utilisé comme liant, avec lequel on constate une perte nette d'adhésion après 1000h de vieillissement dans l'eau à 95°C.

**Tableau III**

| couche B | Fraction massique de copolymère acrylique dans la couche B | Adhésion à t0+ 24h (N/cm) | Adhésion à t0 + 1000h eau chaude (N/cm) |
|---|---|---|---|
| PVDF-3 (témoin) | 100 | 47,2 | 12,3 |
| | | *4,7* | *2,3* |
| CA-1 | 10 | 61,4 | 44,5 |
| | | *9,2* | *3,8* |
| CA-2 | 10 | 54,9 | 57,9 |
| | | *5,6* | *4,6* |
| CA-3 | 10 | 135,2 | 85,5 |
| | | *6,8* | *6,1* |

### Exemple 4

Des tubes multicouches de structure S1 et S3 sont réalisés par coextrusion au moyen d'un dispositif fabriqué par la société McNeil Akron Repiquet. La coextrusion de ces produits est effectuée à une température de 245°C. Le tube présente un diamètre externe de 20 mm et une épaisseur totale de 2 mm. La répartition d'épaisseur au sein des structures est la suivante :
S1 :
   - Couche A : 200 µm
   - Couche B : 100 µm
   - Couche C : 100 µm
   - Couche E : 1600 µm
S3 :
   - Couche B : 300 µm
   - Couche C : 100 µm
   - Couche E : 1600 µm

L'épaisseur totale des couches A et B contenant des polymères fluorés reste identique dans les tubes des 2 structures. La nature et la concentration du copolymère acrylique au sein de la couche B est variable.

**Tableau IV**

| couche B | Fraction massique de copolymère acrylique dans la couche B (%) | Structure du tube | Adhésion à t0+ 24h (N/cm) | Adhésion à t0 + 1000h eau chaude (N/cm) | Adhésion à t0 + 2000h eau chaude (N/cm) |
|---|---|---|---|---|---|
| PVDF-2 + CA-1 | 10 | S1 | 52,9 | 44,5 | 47,2 |
| | | | 3,8 | 3,8 | 2,7 |
| | | S3 | 44,4 | 47,9 | 45,3 |
| | | | 1,2 | 3,1 | 2,9 |
| PVDF-2 + CA-2 | 6 | S1 | N.P. | 49,8 | 49,5 |
| | | | - | 3,1 | 3 |
| | | S3 | N.P. | 51,5 | 47,3 |
| | | | - | 4,2 | 1,9 |

Les données présentées dans le Tableau IV montrent que les adhésions interfaciales, même après vieillissement ne varient pas selon la présence d'une couche interne sans copolymère acrylique. Le choix de l'utilisation de cette couche additionnelle optionnelle dépend alors d'autres propriétés recherchées telles que la perméabilité, la sensibilité chimique ou l'aspect de surface du tube.

## Revendications

1. Structure multicouche comprenant, dans l'ordre :
- une couche B comprenant au moins un polymère fluoré et un copolymère acrylique comprenant des monomères ayant des groupements fonctionnels X,
- une couche C consistant en un premier polymère oléfinique comprenant des monomères ayant des groupements fonctionnels Y aptes à interagir avec les groupements fonctionnels X, les monomères portant des groupements fonctionnels Y étant des époxydes insaturés ou des esters vinyliques d'acides carboxyliques saturés, et
- une couche E comprenant au moins un polymère, notamment un polymère oléfinique, incompatible avec ledit polymère fluoré de ladite couche B.

2. Structure multicouche selon la revendication 1, comprenant en outre une couche A comprenant au moins un polymère fluoré, ladite couche A juxtaposant la couche B.

3. Structure multicouche selon l'une des revendications 1 et 2 comprenant en outre, entre la couche C et la couche E, une couche intermédiaire D comprenant au moins un deuxième polymère oléfinique comprenant des monomères ayant des groupements fonctionnels Z aptes à interagir avec lesdits groupements fonctionnels Y, ledit deuxième polymère oléfinique étant différent de celui/ceux compris dans ladite couche C.

4. Structure multicouche selon l'une des revendications 1 à 3 **caractérisée en ce que** lesdits groupements fonctionnels X sont choisis parmi les groupements carboxyle, les anhydrides d'acide carboxylique, et les mélanges de ces groupements.

5. Structure multicouche selon l'une quelconque des revendications précédentes, **caractérisée en ce que**:
- les époxydes insaturés sont choisis parmi les esters et éther de glycidyle aliphatique tels que l'allylglycidyléther, le vinylglycidyléther, le maléate et l'itaconate de glicydyl, l'acrylate et le méthacrylate de glycidyl, ainsi que les esters et éthers de glycidyl alicycliques ; et **en ce que**
- les esters vinyliques d'acides carboxyliques saturés sont l'acétate de vinyle ou le propionate de vinyle.

6. Structure multicouche selon l'une quelconque des revendications 3 à 5, **caractérisée en ce que** lesdits groupements fonctionnels Z sont choisis parmi les acides carboxyliques insaturés, les acides di-carboxyliques insaturés ayant 4 à 10 atomes de carbone et leurs dérivés anhydride.

7. Structure multicouche selon l'une quelconque des revendications précédentes, **caractérisée en ce que** ledit copolymère acrylique de ladite couche B contient des motifs acrylate d'alkyle, notamment méthacrylate d'alkyle.

8. Structure multicouche selon l'une quelconque des revendications précédentes, **caractérisée en ce que** ledit copolymère acrylique de ladite couche B comprend, en poids, de 1% à 50%, préférentiellement de 1% à 25%, de monomères portant des fonctions X.

9. Structure multicouche selon l'une quelconque des revendications précédentes, **caractérisé en ce que** ladite couche B est exempte de polymère alpha oléfinique comprenant au moins un groupement fonctionnel choisi parmi un groupement carboxyle, un groupement anhydride d'acide, un groupement hydroxyle et un groupement époxy.

10. Structure multicouche selon l'une quelconque des revendications précédentes, **caractérisé en ce que** ledit premier polymère oléfinique de ladite couche C comprend en poids au moins 50%, avantageusement plus de 60%, de préférence au moins 65% de comonomère éthylène en complément du comonomère polaire insaturé ayant des groupements fonctionnels Y.

11. Structure multicouche selon l'une quelconque des revendications précédentes, **caractérisé en ce que** ledit premier polymère oléfinique de ladite couche C est un terpolymère d'éthylène, d'un comonomère polaire insaturé ayant des groupements fonctionnels Y et d'un (méth)acrylate d'alkyle en C₁-C₈, notamment le (méth)acrylate de méthyle, de propyle, de butyle, de 2-ethylhexyle, d'isobutyle ou de cyclohexyle.

12. Structure multicouche selon l'une quelconque des revendications précédentes, **caractérisé en ce que** ledit deuxième polymère oléfinique de ladite couche D est obtenu par greffage d'au moins un monomère polaire insaturé ayant un groupement fonctionnel Z sur au moins un homopolymère de propylène ou un copolymère de propylène et d'un monomère polaire insaturé choisi parmi les esters alkylique en C₁-Cs ou les esters glycidyliques des acides carboxyliques insaturés, ou les sels d'acides carboxyliques insaturés ou leur mélange.

13. Structure multicouche selon l'une quelconque des revendications 1 à 12, **caractérisé en ce que**, lorsque ladite structure multicouche comporte éventuellement la couche A et les couches B, C et E, ledit polymère incompatible de la couche E est choisi parmi les homopolymères d'éthylène, les copolymères d'éthylène et d'au moins un autre monomère choisi parmi les alpha-oléfines, les acrylates d'alkyle, les acétates de vinyle et les mélanges de ces polymères.

14. Structure multicouche selon l'une quelconque des revendications 3 à 12, **caractérisée en ce que**, lorsque ladite structure multicouche comprend une couche D, ledit polymère incompatible de ladite couche E est choisi parmi les homopolymères du propylène, les copolymères du propylène et d'une alpha-oléfine et les mélanges de ces polymères.

15. Tube **caractérisé en ce qu'**il comprend une structure multicouche selon l'une quelconque des revendications précédentes et **en ce que** ladite couche E est la couche externe dudit tube.

16. Utilisation du tube selon la revendication 15 pour le transport de fluides, notamment de liquides, et en particulier de l'eau.

17. Utilisation selon la revendication 16 pour le transport d'eau potable et notamment d'eau chaude potable.

## Patentansprüche

1. Mehrschichtstruktur, die der Reihe nach Folgendes umfasst:
- eine Schicht B, die mindestens ein Fluorpolymer und ein Acrylcopolymer, das Monomere mit funktionellen Gruppen X umfasst, umfasst,
- eine Schicht C, die aus einem ersten Olefinpolymer, das Monomere mit funktionellen Gruppen Y, die mit den funktionellen Gruppen X wechselwirken können, umfasst, besteht, wobei es sich bei den Monomeren, die funktionelle Gruppen Y tragen, um ungesättigte Epoxide oder Vinylester von gesättigten Carbonsäuren handelt, und
- eine Schicht E, die mindestens ein Polymer umfasst, insbesondere ein Olefinpolymer, das mit dem Fluorpolymer der Schicht B unverträglich ist.

2. Mehrschichtstruktur nach Anspruch 1, die außerdem eine Schicht A umfasst, die mindestens ein Fluorpolymer umfasst, wobei die Schicht A neben der Schicht B angeordnet ist.

3. Mehrschichtstruktur nach einem der Ansprüche 1 und 2, die außerdem zwischen der Schicht C und der Schicht E eine Zwischenschicht D umfasst, die mindestens ein zweites Olefinpolymer, das Monomere mit funktionellen Gruppen Z, die mit den funktionellen Gruppen Y wechselwirken können, umfasst, umfasst, wobei das zweite Olefinpolymer von demjenigen bzw. denjenigen in der Schicht C verschieden ist.

4. Mehrschichtstruktur nach einem der Ansprüche 1 bis 3, **dadurch gekennzeichnet, dass** die funktionellen Gruppen X aus Carboxylgruppen, Carbonsäureanhydriden und Mischungen dieser Gruppen ausgewählt sind.

5. Mehrschichtstruktur nach einem der vorhergehenden Ansprüche, **dadurch gekennzeichnet, dass**:
- die ungesättigten Epoxide aus aliphatischen Glycidylestern und -ethern wie Allylglycidylether, Vinylglycidylether, Glycidylmaleat und -itaconat, Glycidylacrylat und -methacrylat sowie alicyclischen Glycidylestern und -ethern ausgewählt sind und
- es sich bei den Vinylestern von gesättigten Carbonsäuren um Vinylacetat oder Vinylpropionat handelt.

6. Mehrschichtstruktur nach einem der Ansprüche 3 bis 5, **dadurch gekennzeichnet, dass** die funktionellen Gruppen Z aus ungesättigten Carbonsäuren, ungesättigten Dicarbonsäuren mit 4 bis 10 Kohlenstoffatomen und Anhydridderivaten davon ausgewählt sind.

7. Mehrschichtstruktur nach einem der vorhergehenden Ansprüche, **dadurch gekennzeichnet, dass** das Acrylcopolymer der Schicht B Alkylacrylat-Einheiten, insbesondere Alkylmethacrylat-Einheiten, enthält.

8. Mehrschichtstruktur nach einem der vorhergehenden Ansprüche, **dadurch gekennzeichnet, dass** das Acrylpolymer der Schicht B 1 bis 50 Gew.-% und vorzugsweise 1 bis 25 Gew.-% Monomere mit Funktionen X umfasst.

9. Mehrschichtstruktur nach einem der vorhergehenden Ansprüche, **dadurch gekennzeichnet, dass** die Schicht B frei von alpha-Olefinpolymer mit mindestens einer funktionellen Gruppe, die aus einer Carboxylgruppe, einer Säureanhydridgruppe, einer Hydroxylgruppe und einer Epoxidgruppe ausgewählt ist, ist.

10. Mehrschichtstruktur nach einem der vorhergehenden Ansprüche, **dadurch gekennzeichnet, dass** das erste Olefinpolymer der Schicht C mindestens 50 Gew.-%, vorteilhafterweise mehr als 60 Gew.-% und vorzugsweise mindestens 65 Gew.-% Ethylen-Comonomer zusätzlich zu dem ungesättigten polaren Comonomer mit funktionellen Gruppen Y umfasst.

11. Mehrschichtstruktur nach einem der vorhergehenden Ansprüche, **dadurch gekennzeichnet, dass** es sich bei dem ersten Olefinpolymer der Schicht C um ein Terpolymer aus Ethylen, einem ungesättigten polaren Comonomer mit funktionellen Gruppen Y und einem C₁-C₈-Alkyl(meth)acrylat, insbesondere Methyl-, Propyl-, Butyl-, 2-Ethylhexyl-, Isobutyl- oder Cyclohexyl(meth)acrylat, handelt.

12. Mehrschichtstruktur nach einem der vorhergehenden Ansprüche, **dadurch gekennzeichnet, dass** das zweite Olefinpolymer der Schicht D durch Aufpfropfen mindestens eines ungesättigten polaren Monomers mit einer funktionellen Gruppe Z auf mindestens ein Propylen-Homopolymer oder ein Copolymer von Propylen und einem ungesättigten polaren Monomer, das aus C₁-C₈-Alkylestern oder Glycidylestern von ungesättigten Carbonsäuren oder Salzen von ungesättigten Carbonsäuren oder einer Mischung davon ausgewählt ist, erhalten wird.

13. Mehrschichtstruktur nach einem der Ansprüche 1 bis 12, **dadurch gekennzeichnet, dass** dann, wenn die Mehrschichtstruktur gegebenenfalls die Schicht A und die Schichten B, C und E umfasst, das unverträgliche Polymer der Schicht E aus Ethylen-Homopolymeren, Copolymeren von Ethylen und mindestens einem anderen Monomer, das aus alpha-Olefinen, Alkylacrylaten und Vinylacetaten ausgewählt ist, und Mischungen dieser Polymere ausgewählt ist.

14. Mehrschichtstruktur nach einem der Ansprüche 3 bis 12, **dadurch gekennzeichnet, dass** dann, wenn die Mehrschichtstruktur eine Schicht D umfasst, das unverträgliche Polymer der Schicht E aus Propylen-Homopolymeren, Copolymeren von Propylen und einem alpha-Olefin und Mischungen dieser Polymere ausgewählt ist.

15. Rohr, **dadurch gekennzeichnet, dass** es eine Mehrschichtstruktur nach einem der vorhergehenden Ansprüche umfasst und es sich bei der Schicht E um die äußere Schicht des Rohrs handelt.

16. Verwendung des Rohrs nach Anspruch 15 zum Transport von Fluiden, speziell von Flüssigkeiten und insbesondere von Wasser.

17. Verwendung nach Anspruch 16 zum Transport von Trinkwasser und insbesondere heißem Trinkwasser.

## Claims

1. A multilayer structure comprising, in order:
- a layer B comprising at least one fluoropolymer and one acrylic copolymer comprising monomers having functional groups X,
- a layer C consisting of one first olefinic polymer comprising monomers having functional groups Y capable of interacting with the functional groups X, the monomers bearing functional groups Y being unsaturated epoxides or vinyl esters of saturated carboxylic acids,
and
- a layer E comprising at least one polymer, in particular an olefinic polymer, incompatible with said fluoropolymer of said layer B.

2. The multilayer structure as claimed in claim 1, further comprising a layer A comprising at least one fluoropolymer, said layer A juxtaposing the layer B.

3. The multilayer structure as claimed in either of claims 1 and 2, further comprising, between the layer C and the layer E, an intermediate layer D comprising at least one second olefinic polymer comprising monomers having functional groups Z capable of interacting with said functional groups Y, said second olefinic polymer being different from that/those included in said layer C.

4. The multilayer structure as claimed in one of claims 1 to 3, **characterized in that** said functional groups X are chosen from carboxyl groups, carboxylic acid anhydrides, and mixtures of these groups.

5. The multilayer structure as claimed in any one of the preceding claims, **characterized in that**:
- the unsaturated epoxides are chosen from aliphatic glycidyl esters and ethers, such as allyl glycidyl ether, vinyl glycidyl ether, glycidyl maleate and itaconate, glycidyl methacrylate and acrylate, and also alicyclic glycidyl esters and ethers; and **in that**
- the vinyl esters of saturated carboxylic acids are vinyl acetate or vinyl propionate.

6. The multilayer structure as claimed in any one of claims 3 to 5, **characterized in that** said functional groups Z are chosen from unsaturated carboxylic acids, unsaturated dicarboxylic acids having 4 to 10 carbon atoms and anhydride derivatives thereof.

7. The multilayer structure as claimed in any one of the preceding claims, **characterized in that** said acrylic copolymer of said layer B contains alkyl acrylate units, in particular alkyl methacrylate units.

8. The multilayer structure as claimed in any one of the preceding claims, **characterized in that** said acrylic copolymer of said layer B comprises, by weight, from 1% to 50%, preferentially from 1% to 25%, of monomers bearing functions X.

9. The multilayer structure as claimed in any one of the preceding claims, **characterized in that** said layer B is free of alpha-olefinic polymer comprising at least one functional group chosen from a carboxyl group, an acid anhydride group, a hydroxyl group and an epoxy group.

10. The multilayer structure as claimed in any one of the preceding claims, **characterized in that** said first olefinic polymer of said layer C comprises, by weight, at least 50%, advantageously more than 60%, preferably at least 65% of ethylene comonomer in addition to the unsaturated polar comonomer having functional groups Y.

11. The multilayer structure as claimed in any one of the preceding claims, **characterized in that** said first olefinic polymer of said layer C is a terpolymer of ethylene, of an unsaturated polar comonomer having functional groups Y and of a C₁-C₈ alkyl (meth)acrylate, in particular methyl, propyl, butyl, 2-ethylhexyl, isobutyl or cyclohexyl (meth)acrylate.

12. The multilayer structure as claimed in any one of the preceding claims, **characterized in that** said second olefinic polymer of said layer D is obtained by grafting at least one unsaturated polar monomer having a functional group Z to at least one propylene homopolymer or one copolymer of propylene and of an unsaturated polar monomer chosen from C₁-C₈ alkyl esters or glycidyl esters of unsaturated carboxylic acids, or salts of unsaturated carboxylic acids or a mixture thereof.

13. The multilayer structure as claimed in any one of claims 1 to 12, **characterized in that**, when said multilayer structure optionally comprises the layer A and the layers B, C and E, said polymer incompatible with the layer E is chosen from ethylene homopolymers, copolymers of ethylene and of at least one other monomer chosen from alpha-olefins, alkyl acrylates, vinyl acetates and the mixtures of these polymers.

14. The multilayer structure as claimed in any one of claims 3 to 12, **characterized in that**, when said multilayer structure comprises a layer D, said polymer incompatible with said layer E is chosen from propylene homopolymers, copolymers of propylene and of an alpha-olefin and the mixtures of these polymers.

15. A tube **characterized in that** it comprises a multilayer structure as claimed in any one of the preceding claims and **in that** said layer E is the outer layer of said tube.

16. The use of the tube as claimed in claim 15 for the transport of fluids, especially of liquids, and in particular of water.

17. The use as claimed in claim 16 for the transport of drinking water and especially hot drinking water.
